# EUROPÄISCHE PATENTANMELDUNG

(11) **EP 0 589 456 A2**
(43) Veröffentlichungstag der Anmeldung: **30.03.1994**
(21) Anmeldenummer: 93115367.0
(22) Anmeldetag: 23.09.1993
(51) Int. Cl.: C13K 1/06, C13K 1/08

(54) **Verfahren zur Weiterverarbeitung von Restabläufen aus der Weizenstärkeproduktion**

(30) Priorität: 24.09.1992 DE 4232075
(71) Anmelder: Starcosa GmbH, D-38122 Braunschweig (DE)
(72) Erfinder: Jahn, Friedrich-H., Dipl.-Ing., D-38126 Braunschweig (DE); Ekelhof, Bernhard, Dipl.-Ing., D-38104 Braunschweig (DE)
(74) Vertreter: Einsel, Martin, Dipl.-Phys.

(57) **Zusammenfassung**

Bei der Weizenstärkeproduktion erhält man neben der A-Stärke und des Glutens einen Restablauf, der die B-Stärke, die Pentosane und das Lösliche enthält. Dieser Restablauf ist gemäß dem Stand der Technik nur zu niedrigpreisigen Produkten weiterverarbeitbar. Das erfindungsgemäße Verfahren zur Weiterverarbeitung der Restabläufe zeichnet sich dadurch aus, daß der zu Hydrolysat verzuckerte Restablauf anschließend durch Kristallisation zu Dextrose und Melasse fraktioniert wird.

## Beschreibung

Die Erfindung betrifft ein Verfahren zur Weiterverarbeitung von Restabläufen aus der Weizenstärkeproduktion, wobei nach Abtrennung der A-Stärke und des Glutens eine Verzuckerung der Restabläufe vorgenommen wird zu einem Hydrolysat mit min. 50 % mas Glucose, mind. 1 % mas Protein und min. 0,5 % mas Salzen. Die Werte sind wie im folgenden auf Trockensubstanz (TS) bezogen.

Weizenkorn wird Üblicherweise zu Mehl und Kleie vermahlen. Aus dem Weizenmehl werden der Gluten (ca. 12 % mas auf Mehl-TS) und die A-Stärke mit einem Proteingehalt von 0,3 % mas gewonnen (ca. 58 % auf Mehl-TS).

Die A-Stärke wird zu einem ganz erheblichen Anteil (üblicherweise 50 - 70 %) zu Produkten, wie Glucose-, Dextrose-, Isoglucosesirup oder Dextrosemonohydrat verarbeitet.

Nach dem Abtrennen der A-Stärke und des Glutens bleibt ein Restablauf übrig, Es handelt sich dabei um eine Art Stärkemilch, die die sogenannte B-Stärke sowie das Prozeßwasser enthält. Diese Bestandteile machen insgesamt ca. 30 % mas der Mehl-TS aus.

Der traditionelle und übliche Weg der Stärkeindustrie, diese B-Stärkemilch weiter zu verarbeiten, ist die Fraktionierung in die Bestandteile. Es wird die B-Stärke abgetrennt, eine stark protein- und aschehaltige Stärke, die getrocknet wird. Ferner werden die Pentosane separat gewonnen. Das verbleibende Abwasser wird anaerob/aerob behandelt oder eingedampft.

Beim Eindampfen werden die löslichen Trockensubstanzbestandteile, auch als "Lösliche" bezeichnet, auf 20 - 30 % mas Trockensubstanz konzentriert. Das Lösliche wird oft gemeinsam mit den Pentosanen und der Kleie zu einem Futtermittel getrocknet.

Diese Verfahrensschritte erfordern erhebliche Investitionen, sind auch von den Betriebskosten her aufwendig und erzeugen darüber hinaus nur Niedrigpreis-Produkte.

Ein weiterer Versuch, diese Restabläufe anders zu nutzen, um die Weizenstärkeproduktion wirtschaftlicher zu gestalten, liegt darin, die Ausbeute an hochpreisigen Produkten zu erhöhen. So ist versucht worden, B-Stärke in A-Stärkequalität umzuwandeln. Man gewinnt hierzu die B-Stärke separat, behandelt sie mit speziellen Enzymmen, die Pentosane und Proteine ablösen, und siebt die letzteren Bestandteile ab. Dieser Prozeß erhöht die A-Stärke-Ausbeute um 4 - 6 %, ist ebenfalls kostenintensiv und unbefriedigend.

Ein drittes Verfahren zur Weiterverarbeitung der Restabläufe aus der Weizenstärkeproduktion ist die enzymatische Verzuckerung. Hierbei entsteht ein Hydrolysat, daß neben 70 - 85 % mas Glucose weitere Zucker wie Maltose, Maltotriose, Fructose und Dextrine enthält und darüber hinaus alle Nichtzuckerstoffe des Ausgangsproduktes. Dieses sind ca. 1 - 3 % mas Asche, 2 - 4 % mas Protein, ca. 1 % mas Milchsäure und Pentosane. Die Nebenbestandteile verhindern, daß das Hydrolysat filtriert werden kann. Dadurch ist es nicht möglich, dieses Produkt mit Aktivkohle zu entfärben und mit Ionenaustauschern zu entsalzen, zwei Standardverfahren der Stärkeindustrie, um ein hochreines Produkt herzustellen.

Dieses unreine Produkt wird deshalb für Fermentationszwecke verkauft und konkurriert dementsprechend mit anderen unreinen Produkten wie Melasse, so daß nur ein beachränkter Absatzmarkt und eine sehr limitierte Preissituation besteht.

Ein Verfahren zur Reinigung von Produkten ist Fraktionierung durch Kristallisation. Die Kristalle sind das reinere Produkt, die Mutterlauge enhält die Verunreinigugnen.

Bei der Erzeugung von Saccharose wird die Kristallisation als Reinigungsverfahren benutzt. Man macht ja doch erhebliche Anstrengungen, um in der Saftreinigung möglichst viele Nebenprodukte abzutrennen, da die Kristallisation bei hohem Gehalt an Nebenprodukten stark verschlechtert wird. Bei 75 % mas Saccharose in der Lösung steigt u. a. die Löslichkeit.

Die Kristallisation von Dextrose in der Monohydrat- oder Anhydridform ist ein in der Stärkeindustrie bekanntes Verfahren. Ausgangsprodukt ist dann ein hochreiner gefilterter, entfärbter und entsalzter Dextrosesirup, nämlich mit 95 % Glucose und 0,05 % Sulfatasche. Die Kristallisation wird hier im wesentlichen zur Abtrennung der Maltose und höheren Zucker eingesetzt. Ziel ist ein kristallines, hochreines Endprodukt mit einer Reinheit größer 99,5 %. Die Kristallisation erfolgt mehrstufig. Beendet wird die Kristallisation, wenn die Mutterlauge nur noch 68 % mas Glucose auf Trockensubstanz enthält.

Die Kristallisation von Dextrose wurde früher auch durchgeführt mit Dextrosesirupen als Ausgangsprodukt, die 2 % mas Asche enthielten. Auch in diesem Falle wurden alle störenden Nebenprodukte, wie Proteine, Pentosane etc., durch Filtration und Aktivkohleentfärbung entfernt. Die Kristallisation wird auch in diesem Fall beendet, wenn der Glucosegehalt der Mutterlauge auf 68 % mas Trockensubstanz erniedrigt wurde.

Die Kristallisation von Dextrose ist erheblich schwieriger als die der Saccharose. Ursache hierfür ist, daß es ein Mutarotationsgleichgewicht zwischen Alpha-D und Beta-D-Glucose gibt. Dextrose kristallisiert deshalb in der Alpha-D und in der Beta-D-Glucose in der Anhydrid- und in der Monohydratform. Beim Auskristallisieren von Alpha-D-Glucose aus der Lösung muß das Mutarotationsgleichgewicht von 37 % Alpha-D-Glucose mit 63 % Beta-D-Glucose laufend neu eingestellt werden, und zwar über einen "Engpaß" von nur 0,0028 % der Aldehydform, was zu sehr langen Kristallisationszeiten führt. Deshalb wird Dextrose immer aus möglichst reinen Lösungen kristallisiert mit Anfangsglucosegehalten von 88 - fast 100 % mas.

Aufgabe der Erfindung ist es gegenüber den bisherigen Verfahren, ein wirtschaftlicheres Verfahren zur Weiterverarbeitung von Restabläufen aus der Weizenstärkeproduktion nach Abtrennung der A-Stärke und des Glutens und nach der Verzuckerung dieser Restabläufe vorzuschlagen.

Diese Aufgabe wird dadurch gelöst, daß das Hydrolysat in einer weiteren Prozeßstufe durch Kristallisation fraktioniert wird in Dextrose und Melasse.

Die Restabläufe werden also zu einem hochunreinen Dextrosesirup verzuckert, der einer Dextrosekristallisation unterzogen wird. Durch die Kristallisation geschieht eine Fraktionierung in relativ reines Dextrosemonohydrat und Melasse, die fast alle Nebenbestandteile des Sirups enthält.

Bevorzugt wird z. B. die mittels Zentrifugation abgetrennte kristalline Dextrose wieder aufgelöst zu einem Sirup, der nachgereinigt wird. Die Nachreinigung kann mittels Aktivkohleentfärbung und Ionenaustausch erfolgen. Der hochreine Dextosesirup kann verkauft oder zu Isoglucose oder kristalliner Dextrose handelsüblicher Qualität verarbeitet werden. Auch das unreine Dextrosemonohydrat selbst kann noch direkt vermarktet werden.

Durch Untersuchungen wurde überraschend entdeckt, daß die in dem unreinen Restablauf, also dem Abfallstrom der Weizenstärkeproduktion, enthaltenen Nebenprodukte nach der Verzuckerung des Abfallstromes zu unreiner Dextroselösung min. 50 % mas Glucose bei einer nachfolgenden Kristallisation nicht stören, obwohl die Nebenprodukte (0,5 - 3 % Asche, 2 - 4 % Protein, ca. 1 % Milchsäure und Pentosane) dazu führen, daß die unreine Dextroselösung nicht einmal zu filtrieren ist, dem 1. Schritt aller üblichen Reinigungsverfahren.

Überraschenderweise führen diese Nebenbestandteile auch dazu, daß die Löslichkeit der Glucose gegenüber nahezu 100 % reiner Dextroselösung merklich abnimmt, wodurch die Kristallisation bei niedrigen Glucosegehalten verbessert wird.

Dadurch ist es möglich, die Dextrosemonohydrat-Kristallisation als Fraktionierungsschritt auf ein Produkt mit min. 50 % mas Glucose anzuwenden.

Bei einstufiger Kristallisation lassen sich z. B. aus unreinem Hydrolysat mit ca. 76 % mas Glucose ca. 10 % mas Dextrose bezogen auf eingesetztes Weizenmehl abtrennen.

Bei der Durchführung des Verfahrens hat es sich als besonders vorteilhaft erwiesen, die nach der ersten Kristallisation ablaufende Mutterlauge einer erneuten Kristallisation zu unterziehen oder die Mutterlauge dem Zulaufstrom zur Kristallisation einfach wieder beizumischen. Hierdurch läßt sich die Ausbeute an Dextrose-Trockensubstanz auf ca. 15 % mas steigern.

Durch die Anwendung des erfindungsgemäßen Verfahrens läßt sich die Wertschöpfung pro Tonne eingesetzten Hydrolysates verdoppeln. Dies ergibt sich aus der Differenz der Marktpreise für die beiden erfindungsgemäßen Fraktionen Dextrose und Melasse und dem Marktpreis für Hydrolysat, das nur für Futter- und Fermentationszwecke eingesetzt werden kann. Diese Differenz beträgt ca. 400,-- DM pro t Ausgangshydrolysat.

Im folgenden wird anhand dreier Figuren der Verfahrensablauf näher veranschaulicht:
Es zeigen:

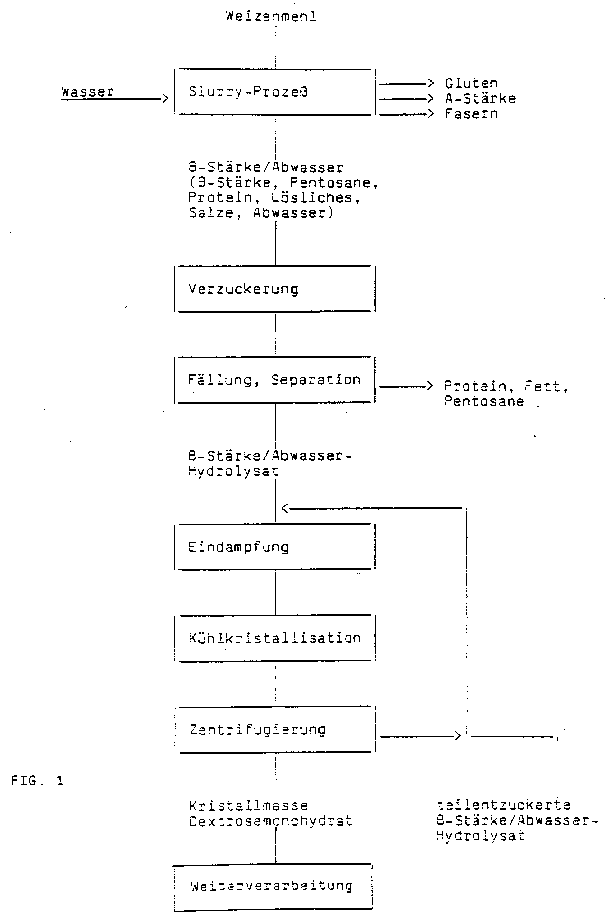

- Fig. 1: ein schematisches Blockdiagram des Gesamtprozesses,
- Fig. 2: den Kristallisationsverlauf in Abhängigkeit von der Zeit und
- Fig. 3: den Glucosegehalt in Abhängigkeit von der Kristallisationstemperatur und -zeit.

Die Figuren zeigen eine bevorzugte Ausführungsform des Verfahrens.

Das Weizenmehl wird zusammen mit Wasser im Slurry-Prozeß in erster Linie zu A-Stärke verarbeitet. Neben der A-Stärke werden Weizenkleber (Gluten) und Fasern abgetrennt.

Im Prozeß verbleiben damit noch B-Stärke, Pentosane, Proteine, Lösliches, Salze und Abwasser.

Im nächsten Schritt wird dieser Abfallstrom, bzw. Restablauf doppelt enzymatisch verzuckert und kommt so auf einen Glucosegehalt von etwa 76 % der Trockensubstanz.

Anschließend kann eine Vorreinigung durch Fällung von Proteinen, Fett und Pentosanen und Abseparierung in einer Zentrifugalmaschine erfolgen.

Das verbleibende B-Stärke-/Abwasserhydrolysat mit 76 % mas Glucose, 2 - 4 % mas Protein, 2 % mas Asche und 1 % mas Milchsäure wird auf 70 % TS eingedampft.

In einem Kühlungskristallisator wird das Produkt mit 10 - 20 % mas Kristallmasse als Saatgut vermischt. Unter langsamem Rühren wird das Produkt von 42 auf 22 °C abgekühlt. Die Kristallisationszeit beträgt 96 Stunden.

Die Dextrosemonohydrat-Füllmasse wird anschließend in einer Zentrifuge entwässert und gewaschen. Dabei erhält man aus 100 kg Trockensubstanz Hydrolysat 450 kg Trockensubstanz Dextrosemonohydrat mit einer Reinheit von 98 % mas Glucose und 550 kg TrockensubstanzMutterlauge mit 58 % mas Glucose. Diese Zahlen wurden in halbtechnischem Maßstab erzielt.

Das teilentzuckerte B-Stärke-/Abwasserhydrolysat (Mutterlauge) wird teilweise wieder dem Prozeß vor der Eindampfung zugeführt, teilweise kann es abgeleitet werden.

Das Dextrosemonohydrat wird wieder aufgelöst, um den entstehenden Sirup anschließend mit bekannten Methoden wie Aktivkohleentfärbung und Ionenaustausch zu reinigen und als hochreinen Dextrosesirup zu verkaufen oder um diesen zu Isoglucose oder kristalliner Dextrose handelsüblicher Qualität zu verarbeiten. Evtl. kann das unreine Dextrosemonohydrat auch direkt vermarktet werden.

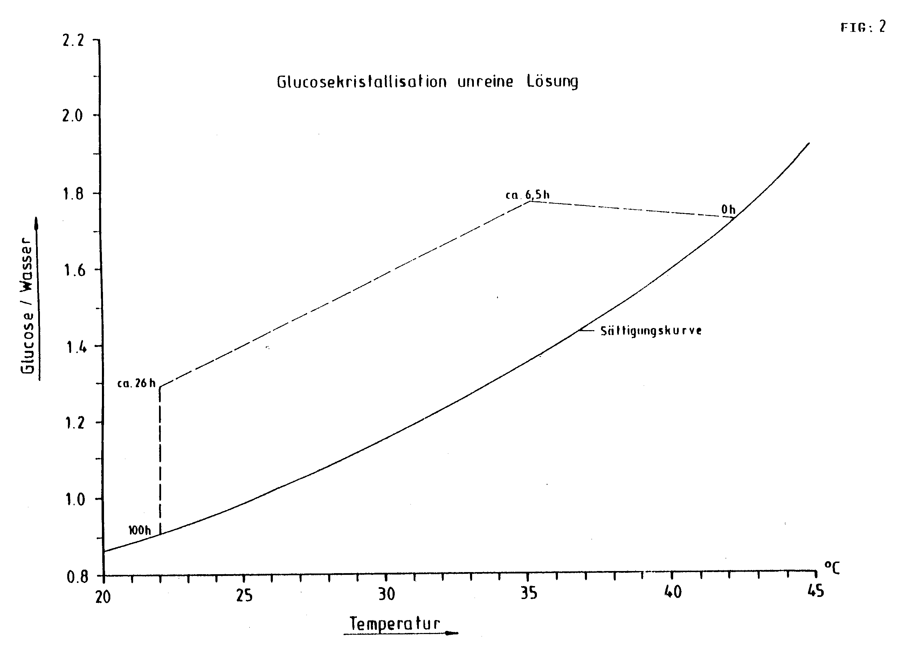

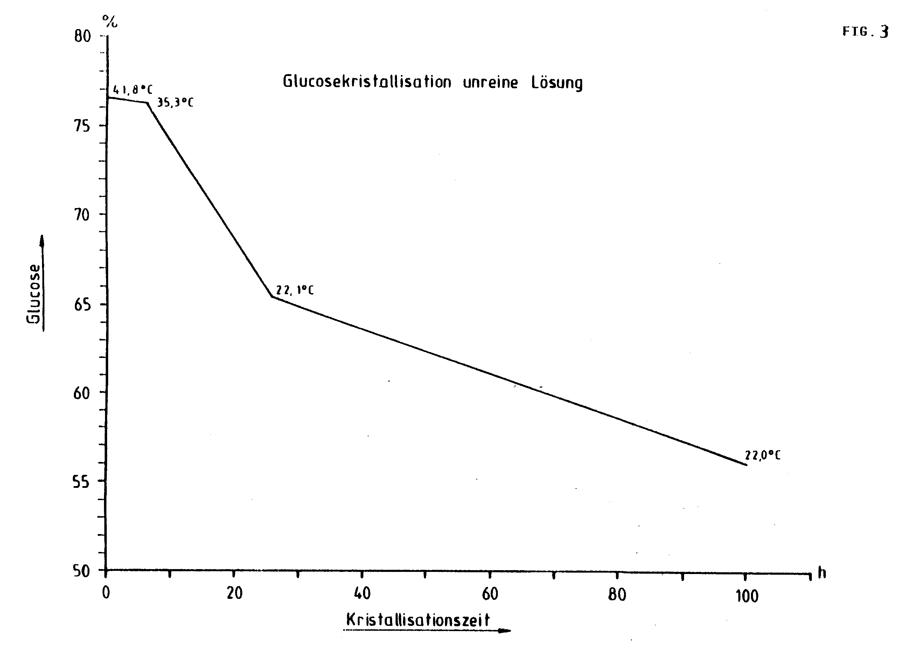

Der Kristallisationsvorgang selbst sei unter Heranziehung der Figuren 2 und 3 noch wie folgt deutlicher beschrieben:
Verzuckertes und durch Fällung und Separation vorgereinigtes B-Stärke-/Abwasserhydrolysat Type Dormaferm 85/70 der Fa. Pfeifer & Langen, Dormagen, mit 70 % TS, 80 - 85 DE, Sulfatasche 1 % mas, pH 3 - 4, Milchsäure auf TS 1,0 % Protein auf TS 2 - 4 % mas und dem Zuckerspektrum:

| | |
|---|---|
| D-Glucose | ca. 76 % mas auf TS |
| Maltose | ca. 2,5 % mas auf TS |
| Maltotriose | ca. 2,1 % mas auf TS |
| Fructose | ca. 4,3 % mas auf TS |
| Dextrine | ca. 8,7 % mas auf TS |

wird einer einstufigen Kristallisation unterzogen.

Fig. 2 zeigt die Sättigungskurve und gibt den Kristallisationsverlauf in Abhängigkeit von der Zelt an.

Fig. 3 zeigt den Glucosegehalt in der Mutterlauge nach der Zentrifugierung in Abhängigkeit von der Kristallisationstemperatur und -zeit. Die mit Saatkristallen versetzte Lösung enthielt 76,5 % mas Glucose auf TS und die Kristallisation begann bei 41,8 °C. Beendet wurde die Kristallisation nach 100 Stunden bei 22 °C. Die Mutterlauge enthielt bei einstufiger Kristallisation 58 % mas Glucose. Durch die Kristallisation wurden 58 % mas der Glucose der Ausgangslösung als Dextrosemonohydrat TS gewonnen.

Die gewonnenen Kristalle hatten eine Reinheit von 98,2 % mas. An Nebenprodukt-Konzentrationen wurden gemessen ca. 0,4 % mas Fructose und 0,3 % mas Maltotriose.

## Patentansprüche

1. Verfahren zur Weiterverarbeitung von Restabläufen aus der Weizenstärkeproduktion, wobei nach Abtrennung des Glutens und der A-Stärke oder eines Teiles dieser A-Stärke eine Verzuckerung der Restabläufe vorgenommen wird zu einem Hydrolysat mit min. 50 % mas Glucose, mind. 1 % mas Protein und mind. 0,5 % mas Salzen,
dadurch gekennzeichnet,
daß anschließend das Hydrolysat durch Kristallisation fraktioniert wird in Dextrose und Melasse.

2. Verfahren nach Anspruch 1,
dadurch gekennzeichnet,
daß die abgetrennte kristalline Dextrose wieder aufgelöst wird zu einem Sirup, der nachgereinigt wird.

3. Verfahren nach einem der vorstehenden Ansprüche,
dadurch gekennzeichnet,
daß die Kristallisation eine Kühlungskristallisation ist.

4. Verfahren nach einem der vorstehenden Ansprüche,
dadurch gekennzeichnet,
daß die aus der Kristallisation ablaufende Mutterlauge einer erneuten Kristallisation unterzogen wird und so eine mehrstufige Kristallisation durchgeführt wird.

5. Verfahren nach einem der vorstehenden Ansprüche,
dadurch gekennzeichnet,
daß die aus der ersten Kristallisation ablaufende Mutterlauge ganz oder teilweise dem Zulaufstrom zur ersten Kristallisation wieder zugeführt wird.

6. Verfahren nach einem der vorstehenden Ansprüche,
dadurch gekennzeichnet,
daß die Restabläufe enzymatisch verzuckert werden.

7. Verfahren nach einem der vorstehenden Ansprüche,
dadurch gekennzeichnet,
daß nach der Verzuckerung eine Fällung von Proteinen, Fett und Pentosanen durchgeführt wird und diese teilweise absepariert werden.
